# EUROPEAN PATENT APPLICATION

(11) **EP 0 671 579 A2**
(43) Date of publication of application: **13.09.1995**
(21) Application number: 95200366.3
(22) Date of filing: 15.02.1995
(51) Int. Cl.: F16L 3/12, F16L 3/10

(54) **Pipe fastening clip**

(30) Priority: 16.02.1994 NL 9400232
(71) Applicant: J. van Walraven B.V., NL-3641 RK Mijdrecht (NL)
(72) Inventor: Van Walraven, Jan, NL-3641 GB Mijdrecht (NL)
(74) Representative: Boelsma, Gerben Harm, Ir.

(57) **Abstract**

Pipe fastening clip (C), comprising a substantially annular clip (A,B) with flanges which may be pulled together by means of a clamping screw (E) and an associated nut (M). A first flange has a through slot (L) that opens into an edge of the flange to laterally receive the shank of the clamping screw. A second flange has a corresponding passage opening and carries on that side facing away from said first flange an auxiliary element containing said nut, which element may hinge against spring action about a shaft positioned transversely to the longitudinal direction of the through slot. When closing the clamping body around the pipe - whereby said two flanges are moved towards each other - said clamping screw pre-mounted will, under the pressure applied by said first flange against the head of the clamping screw, initially tilt outwardly and subsequently, under the spring action of the auxiliary element, tilt back so that its shank is allowed to enter the through slot. The nut takes a pre-tilted position on (in) the auxiliary element, from which the nut can, on the one hand, while the auxiliary element hinges, tilt further and, on the other hand, while the clamping screw is tightened, can be moved into a position in which the nut rests flat against the second flange.

## Description

The invention relates to a pipe fastening clip, consisting of a substantially annular clip body surrounding the pipe to be fastened and having a first and a second flange, which may be pulled together, by means of a clamping screw and an associated nut, said first flange being provided with a through slot that opens into an edge of the flange to laterally receive the shank of the clamping screw and the second flange having a corresponding through opening and being provided on that side facing away from said first flange with an auxiliary element containing said nut, which element can hinge against spring action about a shaft located transversely to the longitudinal direction of the through slot, in such a manner that, when the clamping body is closed around the pipe to be fastened and said two flanges are moved towards each other, said clamping screw pre-screwed into the nut carried by the second flange, may, under the pressure applied by said first flange against the head of the clamping screw, initially tilt outwardly and subsequently, under the spring action of the auxiliary element, tilt back so that its shank is allowed to enter the through slot.

Such a pipe fastening clip is known from EP-A-0387967. In the pipe fastening clip shown therein, the clamping screw in the pre-assembled state is perpendicular to the second flange. In the illustrative embodiment shown, the through slot opens merges into the free end edge of the corresponding (first) flange while an annular clip body is onvolved which is interrupted only at the location of the two flanges, which clip body has to be opened up in order to be able to be fitted around the pipe to be fastened. Upon receiving the pipe, the parts of the clip body which have been moved apart are closed around the pipe. In this case, the flanges which are moving towards each other initially take an outwardly diverging position with respect to each other. This initially divergent position is in fact favourable since the first flange then abuts against the head of the pre-assembled clamping screw in an outwardly and upwardly sloping position which allows said clamping screw - together with the second flange - to tilt outwardly more easily so as to cause said first flange to pass the head.

Such a favourable starting position does not, however, occur in all cases (to the same extent). Therefore, in the case of a clip made from two clip halves to be placed around the pipe from opposite directions and to be fastened to each other, pressing back of the pre-assembled clamping screw(s) takes place essentially in the axial direction of the clamping screw(s), as a result of which said clamping screw(s) will tilt outwards with much more difficulty or only under relatively great pressure. This applies to a still greater extent in the case of a one-piece or composite clip, in which the through slot merges into one of the lateral edges of the corresponding (first) flange.

The invention aims to solve this problem by applying measures whereby tilting of the clamping screw is ensured in all circumstances, i.e. regardless of the one-piece or composite construction of the clip body and regardless of the orientation of the through slot.

This object is achieved according to the invention in that the nut takes a pre-tilted position on (in) the auxiliary element, from which the nut can, on the one hand, while the auxiliary element hinges, tilt further and, on the other hand, while the clamping screw is tightened, can be moved into a position in which the nut rests flat against the second flange.

A practical embodiment, in which the auxiliary element - in accordance with Figs. 3 and 5 of EP-A-0387967 - consists of a small plastic trough, containing the nut and bearing with its mouth against the outer side of the second flange in the pre-assembled state, is characterized in that, of the two opposite side walls of the small trough perpendicular to the longitudinal direction of the through slot, that side wall located on the side of the mouth of the through slot has a greater height than the opposite side wall, the nut being held flat against the thus slanting trough base by clamping or snap action.

In this embodiment, after the pre-assembled clamping screw has been returned into its pre-tilted position when the clamping body is closed around the pipe, tightening of the clamping screw will cause the nut to be raised, against the said clamping or snap action, from the sloping base of the small trough and to be pulled flat against the outer side of the second flange, while simultaneously causing the clamping screw to move to a position perpendicular to the two flanges.

A preferred embodiment, in which the trough-shaped auxiliary element, in accordance with Fig. 5 of EP-A-0387967, engages the two opposite side edges of the second flange by means of two opposite gripping edge portions, is characterized in that the lower trough side wall is connected to the adjacent gripping edge portion through a first hinge line, while a second hinge line, connects the upper through side wall to a connecting strip that normally rests flat against the outer side of the second flange, said strip being connected to the second gripping edge portion through to a third hinge line, in such a way, that tilting of the small trough about said first hinge line causes the connecting strip to hinge about the second and third hinge lines towards a position in which the strip and the upper trough side wall are (virtually) in line with each other.

This preferred embodiment implies that there is a through slot opening into a side wall of the first flange.

The invention is described in greater detail below with reference to the drawing based on a number of illustrative embodiments.
Fig. 1 is a perspective view of a pipe fastening clip with a through slot opening into in a side edge of one of the flanges;
Figs. 2A and 2B show a cross section through the nut holder according to the invention in a simplified embodiment located on the lower flange of the pipe fastening clip according to Fig. 1, in two different tilt positions;
Figs. 3A and 3B show a cross section similar to that illustrated in Fig. 2, with a nut holder which is slightly different from that according to Fig. 2;
Figs. 4A and 4B show a cross section similar to that illustrated in Figs. 2 and 3, with the nut holder according to the invention in a second, preferably applied embodiment and again in two different tilt positions; and
Fig. 5 is a top view of the nut holder according to Fig. 2, in the position according to Fig. 4A and without a nut.

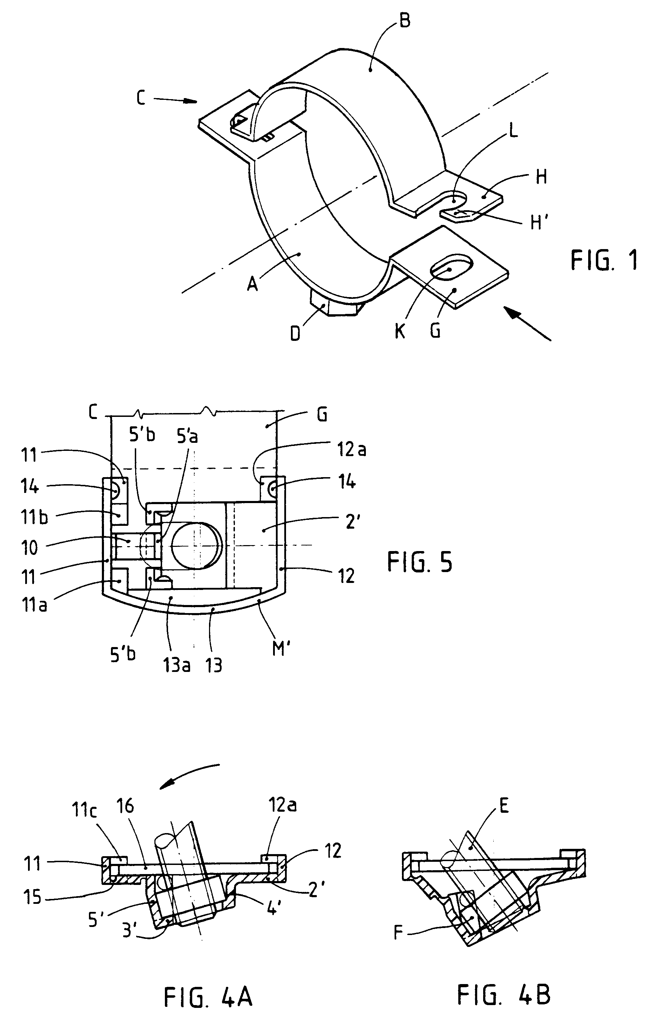

Fig. 1 illustrates a pipe fastening clip made, for example, from metal and of a type which is known per se. This pipe fastening clip consists of two half-clips A and B which are hinge-connected together at C by means of a hook or other type of connection, and the half-clip A of which is provided with a nut D formed on it or welded to it for fastening to a supporting wall.

The half-clips A and B are provided with mutually interacting flanges G and H which can be brought closer together by means of a clamping screw with nut, E and F, respectively. In the lower flange G, there is a slot-shaped hole K widened in the transverse direction, whilst, in the upper flange H, there is a slot L corresponding to the hole K and opening out in the side edge of the flange A located at the front. The flange end H' in this case slants upwards in the transverse direction for the purpose of interacting with the head of the clamping screw E, of which further details will be given below.

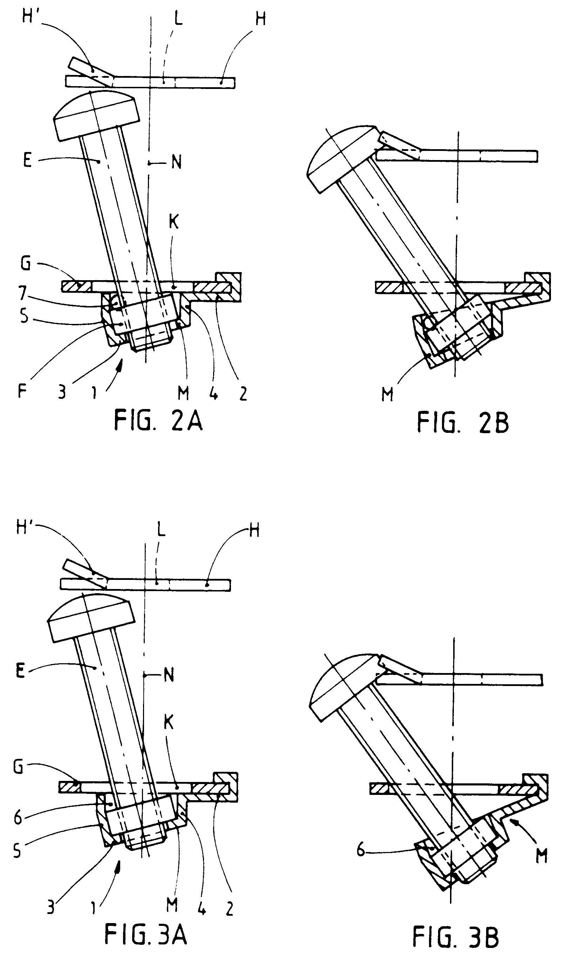

In the case of the nut holder according to the invention, reference is now first of all made to Figs. 2 and 3. The nut holder M pushed on the lower flange G of the fastening clip from Fig. 1 consists essentially of the trough-shaped portion 1 containing the nut F whose connecting portion 2 which extends sideways therefrom "hooks" around the right-hand side edge of the flange G and is provided with a base 3, a low, inner side wall 4 corresponding approximately with the height of the nut F and located on the side with the connecting portion 2, a higher side wall 5 located opposite it and two opposite side walls 6 running in the transverse direction.

In Figs. 2A and 3A, the top edges of the trough-shaped portion 1 rest against the underside of the flange G and the nut F rests flat against the floor 3 which slopes at an angle of, for example, 15° with respect to the flange G. Also, by means of spherical projections 7 extending sideways from the opposite side walls 6, the nut is, in the example of Fig. 2A, securely held in a clamping manner in the trough-shaped portion 1, whilst, in the example according to Fig. 3A, this is achieved without spherical projections. In both cases, the clamping screw which is pre-assembled in the nut F slopes at an angle (15°), corresponding to the transverse slope of the floor 3, with respect to the normal N. In this position, the clamping screw is in a favourable starting position for carrying out a further tilt movement towards the left under the influence of the downward pressure which is exerted by the flange H on the head of the clamping screw E when the two flanges G and H - after the fastening clip has been fitted around the pipe or tube to be fastened - are moved towards each other in order to bring the half-clips closer together around the pipe or tube.

Fig. 2B and Fig. 3B show the moment when the clamping screw E has reached its extreme tilt position by means of the flange H moving towards the flange G in the direction of the arrow.

In the example of Fig. 2B, the tilt movement of the clamping screw E from its starting position according to Fig. 2A is composed of a tilt movement of the nut holder M with respect to the flange G and a tilt movement of the nut F with respect to the nut holder M. In the example of Fig. 3B, conversely, the tilt movement of the clamping screw E from the starting position according to Fig. 3A, is only the result of a tilt movement of the nut holder M with respect to the flange G and no tilting of the nut F within the nut holder M has taken place.

A fraction after reaching the extreme tilt position according to Figs. 2B and 3B, the flange H will have passed the head of the clamping screw E in the downward direction and the nut holder M will be turned back towards the starting position according to Fig. 2A and Fig. 3A, respectively, while the shank of the clamping screw E will enter the slot L. When the clamping screw E is subsequently tightened, it will produce an opposite tilt movement to the normal N and the nut F in the nut holder M will tilt so that, ultimately, its upper surface comes to rest flat against the underside against the lower flange G. The clamping screw E is then aligned with the normal N.

In the embodiment according to Figs. 4-5, a connecting portion 2' of the trough-shaped portion 1' of the nut holder M' grips, just like in the embodiment according to Figs 2 and 3, around the right-hand side edge of the flange G, and - unlike that embodiment - also with a connecting portion 10, located opposite, around the lefthand side edge of the flange G. The two opposite side edges 11 and 12 are connected together by an end edge 13. The side edge 11 in this case grips around the left-hand flange edge by means of lower edge parts lla and llb which face inwards and an upper edge part llc which faces inwards, whilst the side edge 12 grips around the right-hand flange edge by means of an upper edge part 12a which faces inwards and the underlying connection portion 2'.

The end edge 13 furthermore grips over the respective end edge of the flange G by means of an overlying edge part 13a which faces inwards.

The nut holder can thus be pushed on the flange G in the direction of the arrow (see Fig. 1) and is then secured in a clamping manner thereon by means of the spherical projections 14.

In comparison with the simplified embodiment according to Figs. 2 and 3, in the case of the nut holder M' according to Figs. 4-5, the wall 5' corresponding to the wall 5 consists of three parts and specifically a middle section 5'a and two side sections 5'b. Furthermore, the opposite side walls 6 in Figs. 2 and 3, in the case of the nut holder according to Figs. 4-5, have been replaced by only locally present wall parts 6' which form, together with the respective side sections 5'b, two adjoining corner parts of the trough-shaped portion 1'. The wall parts 6' furthermore carry the spherical projections 7', which face each other and are also applied in the embodiment according to Fig. 2, in order to secure the nut F in a clamping manner in its fixed position.

The connecting portion 10 is formed by a narrow plastic strip. This is, on the one hand, connected to the edge part 11 in a hinging manner via a line 15 of material of smaller thickness and, on the other hand, connected to the middle section 5'a of the wall 5' via a line 16 of material with a smaller thickness.

Normally, i.e. when the clamping screw E is in a comparable position with respect to the flange H (not illustrated in Figs. 4-5) to that according to Figs. 2A and 3A, the nut holder assumes the position according to Fig. 4A, i.e. with the connecting portion 2', the upper end of the wall 5' and the connecting part 10 resting flat against the underside of the flange G, namely with the clamping screw in a sloping position with respect to the flange G.

By means of the easily-hinging connecting strip 10, the nut holder M' can be moved, for the purpose of a further tilt movement of the clamping screw E, from the position according to Fig. 4A to that according to Fig. 4B, in which the connecting strip 10 and the central section 5'a of the wall 5' are in line with each other. For the rest, the situation illustrated in Fig. 4B corresponds to that in Fig. 2B. Here, also, after the flange H has passed the head (not illustrated) of the clamping screw E, the nut M' will be "sprung back" into the position according to Fig. 4A and, subsequently, upon tightening of the clamping screw, the latter will gradually be brought to a vertical position with respect to the flange G, as a result of which the nut F is drawn out of its fixed position flat against the flange G.

## Claims

1. Pipe fastening clip, consisting of a substantially annular clip body surrounding the pipe to be fastened and having a first and a second flange, which may be pulled together, by means of a clamping screw and an associated nut, said first flange being provided with a through slot that opens into an edge of the flange to laterally receive the shank of the clamping screw and the second flange having a corresponding through opening and being provided on that side facing away from said first flange with an auxiliary element containing said nut, which element can hinge against spring action about a shaft located transversely to the longitudinal direction of the through slot, in such a manner that, when the clamping body is closed around the pipe to be fastened and said two flanges are moved towards each other, said clamping screw pre-screwed into the nut carried by the second flange, may, under the pressure applied by said first flange against the head of the clamping screw, initially tilt outwardly and subsequently, under the spring action of the auxiliary element, tilt back so that its shank is allowed to enter the through slot, characterized in that the nut takes a pre-tilted position on (in) the auxiliary element, from which the nut can, on the one hand, while the auxiliary element hinges, tilt further and, on the other hand, while the clamping screw is tightened, can be moved into a position in which the nut rests flat against the second flange.

2. Pipe fastening clip according to Claim 1, in which the auxiliary element consists of a small plastic trough, containing the nut and bearing with its mouth against the outer side of the second flange in the pre-assembled state, is characterized in that, of the two opposite side walls of the small trough perpendicular to the longitudinal direction of the through slot, that side wall located on the side of the mouth of the through slot has a greater height than the opposite side wall, the nut being held flat against the thus slanting trough base by clamping or snap action.

3. Pipe fastening clip according to Claim 2, in which the trough-shaped auxiliary element engages the two opposite side edges of the second flange by means of two opposite gripping edge portions, is characterized in that the lower trough side wall is connected to the adjacent gripping edge portion through a first hinge line, while a second hinge line, connects the upper through side wall to a connecting strip that normally rests flat against the outer side of the second flange, said strip being connected to the second gripping edge portion through to a third hinge line, in such a way, that tilting of the small trough about said first hinge line causes the connecting strip to hinge about the second and third hinge lines towards a position in which the strip and the upper trough side wall are (virtually) in line with each other.
